# EUROPEAN PATENT APPLICATION

(11) **EP 1 459 802 A2**
(43) Date of publication of application: **22.09.2004**
(21) Application number: 04251499.2
(22) Date of filing: 17.03.2004
(51) Int. Cl.: B01J 19/00, B01L 3/02

(54) **Methods for fabricating biopolymer arrays**

(30) Priority: 21.03.2003 US 394928
(71) Applicant: Agilent Technologies, Inc., Palo Alto, CA 94303 (US)
(72) Inventor: Peck, Bill J., Mountain View, California 94043 (US); Leproust, Eric M., Campbell, California 95008 (US); Caren, Michael P., Palo Alto, California 94303 (US)
(74) Representative: Tollett, Ian

(57) **Abstract**

Methods and devices for producing a biopolymeric array (12) are provided. In the subject methods, an in situ approach is employed, where the subject methods are characterized by producing a first volume of fluid activator (44) on a substrate (10) surface (11a) and then depositing a second volume of a monomer (48) onto the first volume, where the second volume is smaller than the first volume. Also provided are devices (100) configured for use in the subject methods, including devices that provide for bi-directional array printing.

## Description

The present invention relates to a method of covalently bonding a monomer to a substrate surface and to an array obtainable by means of such a method, particularly biopolymeric arrays such as DNA arrays, and more particularly to *In Situ* protocols for the synthesis of such arrays.

Array assays between surface bound binding agents or probes and target molecules in solution may be used to detect the presence of particular analytes or biopolymers in the solution. The surface-bound probes may be oligonucleotides, peptides, polypeptides, proteins, antibodies or other molecules capable of binding with target biomolecules in the solution. Such binding interactions are the basis for many of the methods and devices used in a variety of different fields, e.g., genomics (in sequencing by hybridization, SNP detection, differential gene expression analysis, identification of novel genes, gene mapping, finger printing, etc.) and proteomics.

One typical array assay method involves biopolymeric probes immobilized in an array on a substrate such as a glass substrate or the like. A solution containing target molecules ("targets") that bind with the attached probes is placed in contact with the bound probes under conditions sufficient to promote binding of targets in the solution to the complementary probes on the substrate to produce a binding complex that is bound to the surface of the substrate. The pattern of binding by target molecules to probe features or spots on the substrate produces a pattern, i.e., a binding complex pattern, on the surface of the substrate that is detected. This detection of binding complexes provides desired information about the target biomolecules in the solution.

The binding complexes may be detected by reading or scanning the array with, for example, optical means, although other methods may also be used, as appropriate for the particular assay. For example, laser light may be used to excite fluorescent labels attached to the targets, generating a signal only in those spots on the array that have a labeled target molecule bound to a probe molecule. This pattern may then be digitally scanned for computer analysis. Such patterns can be used to generate data for biological assays such as the identification of drug targets, single-nucleotide polymorphism mapping, monitoring samples from patients to track their response to treatment, assessing the efficacy of new treatments, etc.

Biopolymer arrays can be fabricated using either deposition of the previously obtained biopolymers or in situ synthesis methods. The deposition methods basically involve depositing biopolymers at predetermined locations on a substrate that are suitably activated such that the biopolymers can link or bond to the substrate surface. Biopolymers of different sequence may be deposited at difference regions on the substrate to yield the completed array. Typical procedures known in the art for deposition of pre-made polynucleotides, particularly DNA, such as whole oligomers or cDNA, are to load a small volume of DNA in solution in one or more drop dispensers such as the tip of a pin or in an open capillary and touch the pin or capillary to the surface of the substrate. Such a procedure is described in U.S. Patent No. 5,807,522. When the fluid touches the surface, some of the fluid is transferred. The pin or capillary must be washed prior to picking up the next type of DNA for spotting onto the array. This process is repeated for many different sequences and, eventually, the desired array is formed. Alternatively, the DNA can be loaded into a drop dispenser in the form of a pulse-jet head and fired onto the substrate. Such a technique has been described in WO 95/25116 and WO 98/41531, among other publications.

The *in situ* synthesis methods include those described in U.S. Patent No. 5,449,754 for synthesizing peptide arrays, as well as WO 98/41531 and the references cited therein for synthesizing polynucleotides (specifically, DNA) using phosphoramidite or other chemistry. Such *in situ* synthesis methods can be basically regarded as iterating the sequence of depositing droplets of: (a) a protected monomer onto predetermined locations on a substrate to link with either a suitably activated substrate surface (or with previously deposited deprotected monomer); (b) deprotecting the deposited monomer so that it can react with a subsequently deposited protected monomer; and (c) depositing another protected monomer for linking. Different monomers may be deposited at different regions on the substrate during any one cycle so that the different regions of the completed array will carry the different biopolymer sequences as desired in the completed array. One or more intermediate further steps may be required in each iteration, such as oxidation and washing steps.

It is important in such arrays that features actually be present, that they are put down accurately in the desired pattern, are of the correct size, and that the DNA is uniformly coated within the feature. However, in the conventional in situ methods for polynucleotide arrays, phosphoramidite nucleoside monomers are used. In order for the phosphoramidite group to link to a hydroxyl of a previously deposited polynucleotide monomer, it must first be activated usually by using a weak acid such as tetrazole.

It has been discovered that many of the features formed on an array have crescent-like features. It is believed that these crescent-like features form as a result of mis-alignment of pulse-jet heads relative to each other and individual pulse-jet head positioning errors. It is important that during the manufacture of the array, the features formed on the array are formed properly. Malformed features on the array may result in a failed analysis and raise suspicion about the features and the overall quality of the array.

A further problem during manufacture of an array is drop misplacement. As described above, an activator must be utilized in order for the incoming monomer, e.g., phosphoramidite, to link to a functional group, e.g., a hydroxyl of a previously deposited polynucleotide monomer, present on the substrate surface. Thus, it is important that the activator be deposited with great precision. By having to deposit the activator with such accuracy, the manufacturing time of the array can only be increased a finite amount without compromising accuracy.

As such, there is a continued interest in the development of new *in situ* array synthesis protocols that obviate one more of the above-described disadvantages of current approaches.

### Relevant Literature

United States Patents of interest include U.S. Patent Nos.: 5,449,754; 6,300,137; 6,284,465; and 6,232,072. Also of interest is WO 98/41531.

Methods and devices for producing a biopolymeric array are provided. In the subject methods, an in situ approach is employed, where the subject methods are characterized by producing a first volume of fluid activator on a substrate surface and then depositing a second volume of a monomer onto the first volume, where the second volume is smaller than the first volume. Also provided are devices configured for use in the subject methods, including devices that provide for bi-directional array printing.

A number of preferred embodiments of the present invention will now be described, with reference to the accompanying drawings, in which:-

FIG. 1 is a perspective view of a substrate bearing multiple arrays, as may be produced by a method and apparatus of the present invention;

FIG. 2 is an enlarged view of a portion of FIG. 1 showing some of the identifiable individual regions (or "features") of a single array of FIG. 1;

FIG. 3 is an enlarged cross-section of a portion of FIG. 2;

FIG. 4 provides a representation of the method of fluid deposition according to the present invention

FIG. 5 is a schematic view of the pulse-jet head assembly that includes a linear configuration of pulse-jet heads where the terminal pulse-jet heads deposit a volume of fluid that is greater than that deposited by the interior pulse-jet heads, according to the present invention; and

FIG. 6 is a schematic view of an *in situ* array fabrication device in accordance with the present invention.

Figures 7A and 7B provide a formula and estimates for determining the mechanical purity of a feature.

### DEFINITIONS

Unless defined otherwise, all technical and scientific terms used herein have the same meaning as commonly understood by one of ordinary skill in the art to which this invention belongs. Still, certain elements are defined below for the sake of clarity and ease of reference.

A "biopolymer" is a polymer of one or more types of repeating units. Biopolymers are typically found in biological systems and particularly include polysaccharides (such as carbohydrates), peptides (which term is used to include polypeptides and proteins) and polynucleotides as well as their analogs such as those compounds composed of or containing amino acid analogs or non-amino acid groups, or nucleotide analogs or non-nucleotide groups. Biopolymers include polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A "nucleotide" refers to a sub-unit of a nucleic acid and has a phosphate group, a 5-carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. Biopolymers include DNA (including cDNA), RNA, oligonucleotides, and PNA and other polynucleotides as described in U.S. Patent No. 5,948,902 and references cited therein (all of which are also incorporated herein by reference), regardless of the source. An "oligonucleotide" generally refers to a nucleotide multimer of about 10 to 100 nucleotides in length, while a "polynucleotide" includes a nucleotide multimer having any number of nucleotides. A "biomonomer" references a single unit, which can be linked with the same or other biomonomers to form a biopolymer (e.g., a single amino acid or nucleotide with two linking groups one or both of which may have removable protecting groups).

A biomonomer fluid or biopolymer fluid reference a liquid containing either a biomonomer or biopolymer, respectively (typically in solution).

A "phosphoramidite" includes a group of the structure of formula (I) below: 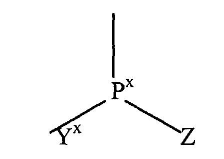 wherein either X is a linking atom such as O or S and may be the same or different; Y is a protecting group such as cyanoethyl; Z may be a halogen (particularly Cl or Br) or a secondary amino group such as morpholino or N(lower alkyl)₂ where the alkyl groups are the same or different, preferably N(i-propyl)₂. By "lower alkyl" is referenced 1 to 8 C atoms. A nucleoside phosphoramidite has a nucleoside or a nucleoside analog with the sugar ring bonded to the free bond on the X in formula (I). For example, one particular nucleoside phosphoramidite is represented by formula (II) below: 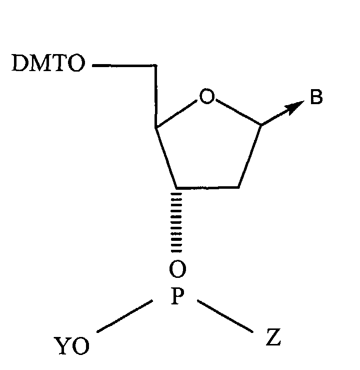 wherein B is a nucleoside base, and DMT is dimethoxytrityl. The O (which may instead be replaced by S) to which DMT is bonded, acts as a second linking group which is protected by the DMT. Protecting groups other than DMT may be used, and their removal during deprotection is known in oligonucleotide synthesis. Other nucleoside phosphoramidites are also known, for example ones in which the phosphoramidite group is bonded to a different location on the 5-membered sugar ring. Phosphoramidites and nucleoside phosphoramidites are described in U.S. Pat. No. 5,902,878, U.S. Pat. No. 5,700,919, U.S. Pat. No. 4,415,732, PCT publication WO 98/41531 and the references cited therein (the disclosures of which are herein incorporated by reference), among others.

A "group" includes both substituted and unsubstituted forms. An "addressable array" includes any one or two dimensional arrangement of discrete regions (or "features") bearing particular biopolymer moieties (for example, different polynucleotide sequences) associated with that region and positioned at particular predetermined locations on the substrate (each such location being an "address"). These regions may or may not be separated by intervening spaces. It will also be appreciated that throughout the present application, words such as "upper", "lower" and the like are used with reference to a particular orientation of the apparatus with respect to gravity, but it will be understood that other operating orientations of the apparatus or any of its components, with respect to gravity, are possible. Reference to a "droplet" being dispensed from a pulse-jet herein, merely refers to a discrete small quantity of fluid (usually less than about 1000 pL) being dispensed upon a single pulse of the pulse-jet (corresponding to a single activation of an ejector) and does not require any particular shape of this discrete quantity. When a "spot" is referred to, this may reference a dried spot on the substrate resulting from drying of a dispensed droplet, or a wet spot on the substrate resulting from a dispensed droplet which has not yet dried, depending upon the context. "Fluid" is used herein to reference a liquid. Use of the singular in reference to an item, includes the possibility that there may be multiple numbers of that item.

An "array," includes any one-dimensional, two-dimensional or substantially two-dimensional (as well as a three-dimensional) arrangement of addressable regions bearing a particular chemical moiety or moieties (e.g., biopolymers such as polynucleotide or oligonucleotide sequences (nucleic acids), polypeptides (e.g., proteins), carbohydrates, lipids, etc.) associated with that region. In the broadest sense, the preferred arrays are arrays of polymeric binding agents, where the polymeric binding agents may be any of: polypeptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like. Where the arrays are arrays of nucleic acids, the nucleic acids may be covalently attached to the arrays at any point along the nucleic acid chain, but are generally attached at one of their termini (e.g. the 3' or 5' terminus). Sometimes, the arrays are arrays of polypeptides, e.g., proteins or fragments thereof.

Any given substrate may carry one, two, four or more arrays disposed on a front surface of the substrate. Depending upon the use, any or all of the arrays may be the same or different from one another and each may contain multiple spots or features. A typical array may contain more than ten, more than one hundred, more than one thousand, more than ten thousand features, or even more than one hundred thousand features, in an area of less than 20 cm² or even less than 10 cm². For example, features may have widths (that is, diameter, for a round spot) in the range from a 10 µm to 1.0 cm. In other embodiments each feature may have a width in the range of 1.0 µm to 1.0 mm, usually 5.0 µm to 500 µm, and more usually 10 µm to 200 µm. Non-round features may have area ranges equivalent to that of circular features with the foregoing width (diameter) ranges. At least some, or all, of the features are of different compositions (for example, when any repeats of each feature composition are excluded the remaining features may account for at least 5%, 10%, or 20% of the total number of features). Interfeature areas will typically (but not essentially) be present which do not carry any polynucleotide (or other biopolymer or chemical moiety of a type of which the features are composed). Such interfeature areas typically will be present where the arrays are formed by processes involving drop deposition of reagents but may not be present when, for example, photolithographic array fabrication processes are used. It will be appreciated though, that the interfeature areas, when present, could be of various sizes and configurations.

Each array may cover an area of less than 100 cm², or even less than 50 cm², 10 cm² or 1 cm². In many embodiments, the substrate carrying the one or more arrays will be shaped generally as a rectangular solid (although other shapes are possible), having a length of more than 4 mm and less than 1 m, usually more than 4 mm and less than 600 mm, more usually less than 400 mm; a width of more than 4 mm and less than 1 m, usually less than 500 mm and more usually less than 400 mm; and a thickness of more than 0.01 mm and less than 5.0 mm, usually more than 0.1 mm and less than 2 mm and more usually more than 0.2 and less than 1 mm. With arrays that are read by detecting fluorescence, the substrate may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, substrate 10 may transmit at least 20%, or 50% (or even at least 70%, 90%, or 95%), of the illuminating light incident on the front as may be measured across the entire integrated spectrum of such illuminating light or alternatively at 532 nm or 633 nm.

Arrays can be fabricated using drop deposition from pulse-jets of either polynucleotide precursor units (such as monomers) in the case of *in situ* fabrication, or the previously obtained polynucleotide. Such methods are described in detail in, for example, US 6,242,266, US 6,232,072, US 6,180,351, US 6,171,797, US 6,323,043, U.S. Patent Application Serial No. 09/302,898 filed April 30, 1999 by Caren et al., and the references cited therein. These references are incorporated herein by reference. Other drop deposition methods can be used for fabrication, as previously described herein. Interfeature areas need not be present particularly when the arrays are made by photolithographic methods as described in those patents.

A "pulse-jet" is a device that can dispense drops in the formation of an array. Pulse-jet devices operate by delivering a pulse of pressure to liquid adjacent an outlet or orifice such that a drop will be dispensed therefrom (for example, by a piezoelectric or thermoelectric element positioned in a same chamber as the orifice).

An array is "addressable" when it has multiple regions of different moieties (e.g., different polynucleotide sequences) such that a region (i.e., a "feature" or "spot" of the array) at a particular predetermined location (i.e., an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probe" may be the one which is to be evaluated by the other (thus, either one could be an unknown mixture of polynucleotides to be evaluated by binding with the other). A "scan region" refers to a contiguous (preferably, rectangular) area in which the array spots or features of interest, as defined above, are found. The scan region is that portion of the total area illuminated from which the resulting fluorescence is detected and recorded. For the purposes of this invention, the scan region includes the entire area of the slide scanned in each pass of the lens, between the first feature of interest, and the last feature of interest, even if there exist intervening areas which lack features of interest. An "array layout" refers to one or more characteristics of the features, such as feature positioning on the substrate, one or more feature dimensions, and an indication of a moiety at a given location. "Hybridizing" and "binding", with respect to polynucleotides, are used interchangeably.

By "remote location," it is meant a location other than the location at which the array is present and hybridization occurs. For example, a remote location could be another location (e.g., office, lab, etc.) in the same city, another location in a different city, another location in a different state, another location in a different country, etc. As such, when one item is indicated as being "remote" from another, what is meant is that the two items are at least in different rooms or different buildings, and may be at least one mile, ten miles, or at least one hundred miles apart. "Communicating" information references transmitting the data representing that information as electrical signals over a suitable communication channel (e.g., a private or public network). "Forwarding" an item refers to any means of getting that item from one location to the next, whether by physically transporting that item or otherwise (where that is possible) and includes, at least in the case of data, physically transporting a medium carrying the data or communicating the data. An array "package" may be the array plus only a substrate on which the array is deposited, although the package may include other features (such as a housing with a chamber).

A "computer-based system" refers to the hardware means, software means, and data storage means used to analyze the information of the present invention. The minimum hardware of the computer-based systems of the present invention comprises a central processing unit (CPU), input means, output means, and data storage means. A skilled artisan can readily appreciate that any one of the currently available computer-based system are suitable for use in the present invention. The data storage means may comprise any manufacture comprising a recording of the present information as described above, or a memory access means that can access such a manufacture.

To "record" data, programming or other information on a computer readable medium refers to a process for storing information, using any such methods as known in the art. Any convenient data storage structure may be chosen, based on the means used to access the stored information. A variety of data processor programs and formats can be used for storage, e.g. word processing text file, database format, etc.

A "processor" references any hardware and/or software combination that will perform the functions required of it. For example, any processor herein may be a programmable digital microprocessor such as available in the form of a electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

In accordance with the present invention, suitable "activators" include, but are not limited to, tetrazole, S-ethyl tetrazole, dicyanoimidazole ("DCI"), or benzimidazolium triflate.

Methods and devices for producing a biopolymeric array are provided. In the subject methods, an *in situ* approach is employed, where the subject methods are characterized by producing a first volume of fluid activator on a substrate surface and then depositing a second volume of a monomer onto the first volume, where the second volume is smaller than the first volume. Also provided are devices configured for use in the subject methods, including devices that provide for bi-directional array printing.

Before the subject invention is described further, it is to be understood that the invention is not limited to the particular embodiments of the invention described below, as variations of the particular embodiments may be made and still fall within the scope of the appended claims.

It is also to be understood that the terminology employed is for the purpose of describing particular embodiments, and is not intended to be limiting. Instead, the scope of the present invention will be established by the appended claims.

In this specification and the appended claims, the singular forms "a," "an" and "the" include plural reference unless the context clearly dictates otherwise. Unless defined otherwise, all technical and scientific terms used herein have the same meaning as commonly understood to one of ordinary skill in the art to which this invention belongs.

Where a range of values is provided, it is understood that each intervening value, to the tenth of the unit of the lower limit unless the context clearly dictates otherwise, between the upper and lower limit of that range, and any other stated or intervening value in that stated range, is encompassed within the invention. The upper and lower limits of these smaller ranges may independently be included in the smaller ranges, and are also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood to one of ordinary skill in the art to which this invention belongs. Although any methods, devices and materials similar or equivalent to those described herein can be used in the practice or testing of the invention, the preferred methods, devices and materials are now described.

All publications mentioned herein are incorporated herein by reference for the purpose of describing and disclosing the invention components that are described in the publications which might be used in connection with the presently described invention.

In further describing the invention in greater detail than provided in the Summary and as informed by the Background and Definitions provided above, representative embodiments of the subject methods are described first in greater detail, followed by a review of representative scanning device embodiments of the of the invention. Also provided are discussions of representative applications in which the subject methods and devices find use.

### METHODS

As summarized above, the present invention provides methods for fabricating biopolymer arrays on a substrate using an *in situ* fabrication protocol, where the array is fabricated using a pulse-jet head.

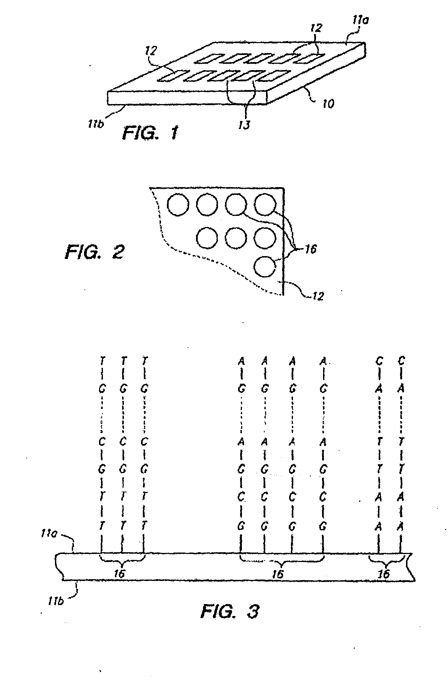

Arrays that may be produced with the subject methods may vary in form and composition. Referring first to FIGS. 1-3, in many embodiments the present invention will produce multiple identical arrays 12 (only some of which are shown in FIG. 1) across a complete front surface 11a of a single substrate 10 (which also has a back surface 11b). However, the arrays 12 produced on a given substrate need not be identical and some or all could be different. Each array 12 will contain multiple spots or features 16. The arrays 12 are shown as being separated by spaces 13. A typical array 12 may contain from 100 to 100,000 features. All of the features 16 may be different, or some or all could be the same. Each feature carries a predetermined polynucleotide having a particular sequence, or a predetermined mixture of polynucleotides. This characteristic is illustrated schematically in FIG. 3 where different regions 16 are shown as carrying different polynucleotide sequences. While arrays 12 are shown separated from one another by spaces 13, and the features 16 are separated from one another by spaces, such spaces in either instance are not essential.

As summarized above, the present methods are methods for the *in situ* preparation of arrays of two or more biopolymeric ligands, particularly nucleic acid ligands, on the surface of a solid support. The *in situ* protocols in which the subject methods find use are methods of polymeric synthesis in which repeated sequential contact of an activated monomer to a terminal functional moiety of a growing polymeric ligand under conditions such that the activated monomer covalently bonds to terminal functional moiety is employed to produce surface bound ligands of desired monomeric residue sequence. *In situ* protocols for the use in the synthesis of polymeric ligand arrays are known in the art, being described in U.S. Patent Nos. 6,306,599; and 6,300,137; the disclosures of which are herein incorporated by reference.

A feature of the present invention is that at each monomeric residue addition or coupling step in the synthesis protocol of a given ligand feature or element of the array, a first volume of a fluid activator is produced at a surface location and then a second volume of activatable monomer is deposited onto the first volume, where the first volume exceeds the second volume, such that the second volume of fluid is smaller than the first volume. In the subject methods, the first volume typically exceeds the second volume by at least about 1.5 , usually by at least about 2 and more usually by at least about 5 fold. In many embodiments, the first volume ranges from about 20 to about 400 pl, usually from about 30 to about 120 pl and more usually from about 30 to about 80 pl, while the second volume generally ranges from about 5 to about 300 pl, usually from about 10 to about 80pl and more usually from about 20 to about 30 pl.

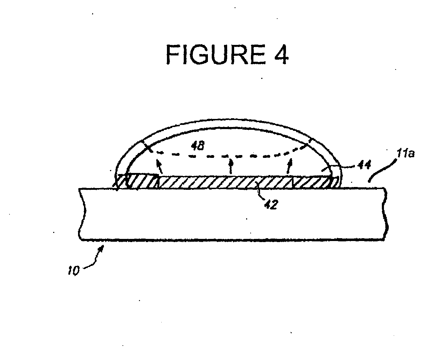

Referring now to Figure 4 in particular, the principle of the present invention can be understood. Figure 4 is not to scale, with some features being exaggerated for clarity. It will be assumed that a substrate bound moiety is present at least at the location of each feature or region to be formed. Such substrate bound moiety may, for example, be a nucleoside monomer that has been deposited and deprotected at the location of each feature, such that the second linking group is available for linking to another activated monomer. Alternatively, the substrate bound moiety may be a suitable linking group previously attached to surface 11a of the substrate 10.

Figure 4 shows the result of practice of the subject methods following addition of the first and second volumes onto a location of the surface 11a of substrate 10. In Figure 4, one can see the produced first volume of fluid activator 44 on the substrate surface 11a such that the functional groups/feature 42 are covered by the fluid activator drop 44, but the drop size does not extend beyond the edge/perimeter of the feature. The volume of fluid activator 44 may be deposited onto the feature 42 region or location through a single drop or a series of drops to deposit a desired volume. Where the fluid activator volume 44 is produced by depositing a series of drops, the number of drops may vary, where the number of drops deposited to produce the desired first volume of fluid activator may range from about 1 to about 10, such as from about 1 to about 6. Utilizing a series of smaller drops can provide advantages over deposition in a single fluid drop, such as reduction in splat diameter, where a smaller splat diameter can ensure denser features without merging in the ultimately produced array. The volume of fluid activator 44 deposited onto the substrate is generally sufficiently large to encompass the area of the functional moiety/feature 42, as shown in Figure 4, to which linkage with the activated monomer is desired, but no so large as to extend beyond the edge/perimeter of the feature.

After the fluid activator 44 has been deposited onto the substrate surface, a second volume of fluid biomonomer 48 is deposited onto the initial volume of fluid activator 44, where the second volume is less than the first volume, as described above. The volume of fluid monomer deposited is less than the volume of fluid activator previously deposited, wherein the smaller volume of monomer may intermix with the volume of fluid activator previously deposited. The mixing action is generated by the impact of the droplet containing the monomer with the large volume sessile drop containing the activator.

The activator activates the first linking group of the monomer, e.g., a phosphoramidite group as found in monomers employed in *in situ* nucleic acid production, such that the activated group will then link with the substrate bound moiety, or a deprotected monomer deposited in a previous step, e.g., a hydroxyl moiety, to produce a covalent bond, such that the monomer in the deposited second volume becomes covalently bound to the substrate surface, either directly or through one or more intervening monomeric residues of a polymeric ligand.

The above steps can be repeated at each region on the assay until the desired biopolymer has been synthesized. It shall be understood however, that intermediate oxidation, deprotection, washing and other steps may be required between cycles, as is well known in the art of synthesizing biopolymers. These cycles may be repeated using different or the same monomers at multiple regions over multiple cycles as required to fabricate the desired array or arrays 12 on substrate 10.

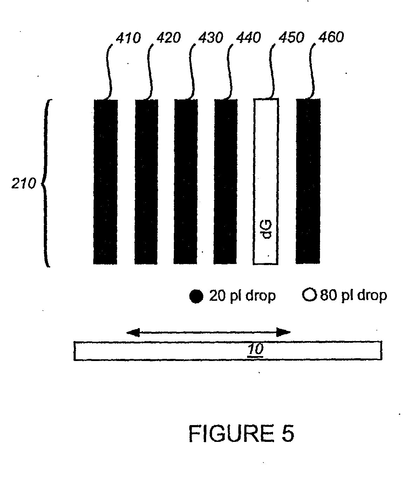

As described above, by providing a larger volume of fluid activator on the substrate surface, variations in pulse-jet head alignment, e.g., between multiple independently movable heads in a head assembly as depicted in Figure 5, are virtually, if not completely, eliminated. Such printhead misalignment problems, e.g., crescent formation of incomplete polymers, is described extensively in U.S. Patent No. 6,300,137, the disclosure of which is herein incorporated by reference. Further still, by depositing a smaller second volume of fluid into the larger first volume of fluid any variation in alignment of the pulse-jet head to the substrate is eliminated. For example, assuming that the first volume of fluid deposited was 80 pl, a smaller volume of the second fluid, approximately 20 pl, will produce a radius ratio of approximately .63. However, this ratio may be further reduced by comparing the second drop size in free flight to the sessile drop size of the first drop. For the drop volumes given above the relevant ratio becomes approximately .48. It can be seen that these ratios lessen the placement accuracy required of the monomer droplet, thereby allowing production speed to be increased as well as decreasing defects due to misplaced droplets. As such, the subject methods of depositing a larger volume of fluid activator and a smaller volume of monomer onto the larger volume provide a number of advantages in pulse-jet in situ fluid deposition protocols.

Programming for practicing at least certain embodiments of the subject methods is also provided. For example, in certain embodiments as described above, the methods employ a device that includes a plurality of pulse jets, wherein the device is configured to be movable in at least two axes to form an array according to the present invention. In such methods, programming may be employed which allows a user to input a value from which the device may then fabricate an array according to the subject methods, i.e., by producing a first volume of fluid activator and depositing a second volume of fluid monomer onto the first volume, where the second volume is less than the first volume, as described above.

Programming according to the present invention can be recorded on computer readable media, e.g., any medium that can be read and accessed directly or indirectly by a computer. Such media include, but are not limited to: magnetic tape; optical storage such as CD-ROM and DVD; electrical storage media such as RAM and ROM; and hybrids of these categories such as magnetic/optical storage media. One of skill in the art can readily appreciate how any of the presently known computer readable mediums can be used to create a manufacture that includes a recording of the present programming/algorithms for carrying out the above-described methodology.

In certain embodiments, the system is further characterized in that it provides a user interface, where the user interface presents to a user the option of selecting among one or more different, including multiple different, inputs. Representative inputs for selection that the user interface could present include, choosing the features to be formed on the substrate, choosing from a plurality of choices the type of array to be formed, choosing whether the device will produce the first volume by deposition of a single larger drop of fluid activator or multiple smaller drops of fluid activator, and the like.

### DEVICES

Also provided are pulse-jet fluid deposition devices configured for use in the subject methods. A number of different array fabrication pulse-jet fluid deposition devices are known in the art, including those described U.S. Patent Nos. 4,877, 745; 5,338,688; 5,449,754; 5,474,796; 5,658,802; 5,700,637; and 5,958,342; 6,284,465 and 6,306,599; the disclosures of which are herein incorporated by reference. In many embodiments, a feature of pulse-jet deposition devices of the present invention is that they include programming that directs them to produce arrays according to the present methods.

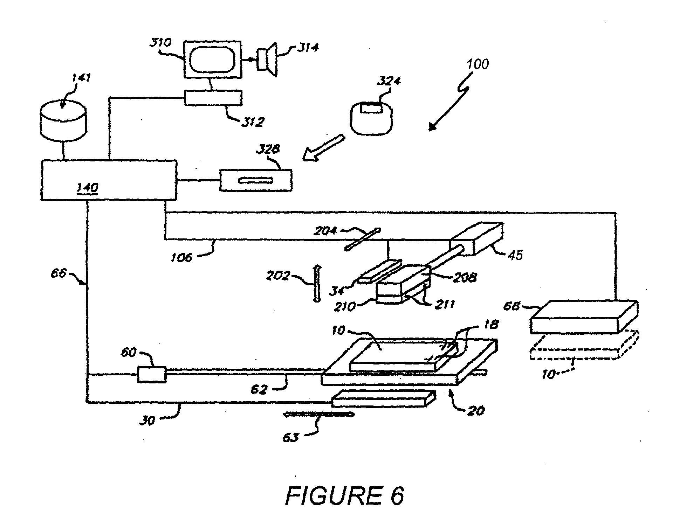

Referring now to Figure 6, there is shown device 100, wherein device 100 includes a substrate station 20 on which can be mounted a substrate 10. Pins 18 or similar means (not shown) can be provided on substrate station 22 by which to approximately align substrate 10 to a nominal position thereon. Substrate station 20 can include a vacuum chuck connected to a suitable vacuum source (not shown) to retain a substrate 10 without exerting too much pressure thereon, since substrate 10 is often made of glass. A flood station 68 is provided which can expose the entire surface of the substrate 10, when positioned beneath the station 68 as illustrated in broken lines in Figure 6, to a fluid typically use in the *in situ* process, and to which all features must be exposed during each cycle (for example, oxidizer, deprotection agent, and wash buffer).

A pulse-jet head assembly 210 of stacked pulse-jet heads is retained by a head retainer 208. A positioning system includes a carriage 62 connected to a first transporter 60 controlled by a processor 140, and a second transporter 45 controlled by processor 100. Transporter 60 and carriage 22 are used to execute one axis position of station 20 (and hence mounted substrate 10) facing the dispensing head assembly 210, by moving it in the direction of arrow 63, while transporter 45 is used to provide adjustment of the position of head retainer 208 (and hence head assembly 210) in a direction of axis 204. In this manner, head assembly 210 can be moved line-by-line, by moving the head assembly 210 along a line over a substrate 10 in the direction of axis 204 using transporter 45, while line by line movement of substrate 10 in the direction of axis 63 is provided by transporter 60. Transporter 60 can also move substrate holder 20 to position the substrate 10 beneath flood station 68. Head assembly 210 may also optionally be moved in a vertical direction 202, by another suitable transporter (not shown). It will be appreciated that other configurations could be used. It will also be appreciated that both transporters 60 and 45, or either one of them, with suitable construction, could be used to perform the foregoing motion of the head assembly 210 with respect to the substrate. Thus, when the present invention recites "positioning" one element (such as head assembly 210) in relation to another element (such as one of the stations 20 or substrate 10) it will be understood that any required moving can be accomplished by moving either element or a combination of both of them. The head assembly 210, the positioning systems, and processor 140, together act as the deposition system of the device 100 in accordance with the present invention. An encoder 30 provides data on the exact location of the holder 20, and hence the head assembly position. Any suitable encoder, such as an optical encoder, may be used which provides data on linear position.

Referring now to Figure 5, there is shown an exemplary embodiment of the pulse jet head assembly 210 in accordance with the present invention. Head assembly 210 may be of the type commonly used for *in situ* processes, though in a preferred embodiment, the head assembly 210 includes a plurality of pulse-jet heads 410, 420, 430, 440, 450 and 460 (at least about three, and often six), stacked together in a linear configuration, wherein at least two of the pulse-jet heads (e.g., 410 and 460) are configured to deliver fluid activator and the remaining pulse-jet heads (e.g., 420, 430, 440 and 450) are configured to deliver fluid monomeric compositions. The pulse-jet heads of the head assembly are configured in a linear configuration in the representative embodiment shown schematically in Figure 5, where the terminal pulse-jet heads (410 and 460) are configured to deposit fluid activator and the internal pulse-jet heads (420, 430, 440 and 450) are configured to deposit fluid monomer. In certain embodiments, the terminal pulse-jet heads deposit a fluid drop that exceeds in volume the fluid drops deposited by the internal pulse-jets, e.g., where the volume deposited by the internal heads is often less than about 75%, such as less than about 50%, or less than about 25 % of the volume deposited by the terminal heads.

Each pulse-jet head of the head assembly is associated with a corresponding set of one or more drop dispensing orifices and ejectors, which are positioned in the chambers opposite respective orifices. The pulse-jet heads may be any convenient pulse jet including, such as a thermal pulse jet head, a piezoelectric pulse jet head, etc., where these disparate types of pulse jet heads are well known to those of skill in the art. While the following additional description is provided primarily in terms of a thermal pulse-jet head device, piezoelectric devices may be preferred in certain embodiments and come within the scope of the invention. Each ejector is in the form of an electrical resistor operating as a heating element under control or processor 50 (although piezoelectric elements could be used instead). Each orifice with its associated ejector and portion of the chamber, defines a corresponding pulse-jet head. Application of a single electric pulse to an ejector will cause a droplet to be dispensed from a corresponding orifice. Certain elements of the heads of head assembly 30 can be adapted from parts of a commercially available thermal inkjet head device available from Hewlett-Packard Co. as part no. HP51645A. Alternatively, multiple heads could be used instead of a single head and being provided with respective transporters under control of processor 140 for independent movement. In this alternative configuration, each head may dispense a corresponding monomer or activator.

As is well know in the pulse-jet art, the amount of fluid that is expelled in a single activation event of a pulse jet can be controlled by changing one or more of a number of parameters, including the orifice diameter, the orifice length (thickness of the orifice member at the orifice), the size of the deposition chamber, and the size of the heating element, along with others. The amount of fluid that is expelled during a single activation event is generally in the range of about 0.1 pL to 1000 pL, usually about 0.5 to about 500 pL and more usually about 1.0 to about 250 pL. A typical velocity at which fluid is expelled from the chamber is more than about 1 m/s, usually more than about 10 m/s, and may be as great as about 20 m/s or greater. As will be appreciated, if the orifice is in motion with respect to the receiving surface at the time an ejector is activated, the actual site of deposition of the material will not be the location that is at the moment of activation in a line-of-sight relation to the orifice, but will be a location that is predictable for the given distances and velocities. As described above, by depositing a larger volume of activator, the target area for deposition of the monomer is expanded, thereby increasing production speed while reducing errors.

As described above, the activator delivering pulse-jet heads are preferably disposed on opposite ends of the pulse-jet head assembly as shown in Figure 6. The placement of the activator delivering pulse-jet heads on each end of the pulse-jet head assembly enables the array to be fabricated bi-directionally. That is, as the pulse-jet head moves across the substrate surface, the first activator dispensing pulse-jet head can be activated to deliver a volume of activator to each feature location. The remaining pulse-jet heads, configured to deliver monomers, can be activated to deliver a volume of monomer to each feature location as desired or according to programmed instructions. Once the pulse-jet head assembly has traveled across the length or width of the substrate, the pulse-jet head assembly can be stepped to start a new row. Unlike previous fabrication methods and devices, the pulse jet head assembly according to the present invention does not have to be returned to a "home" position because of the second activator dispensing pulse-jet head disposed on the pulse-jet head assembly. The second activator dispensing pulse-jet head can be activated to deposit activator followed by delivery of an appropriate monomer. By placing the activator delivering pulse-jet heads on the ends of the pulse-jet head assembly the fabrication time may be significantly lowered because the pulse-jet head assembly does not have to return to a home position to start the fabrication of a new row of features. Additionally, because the pulse-jet head assembly requires less motion, less vibration is transferred to the substrate holder and subsequently the substrate during the formation of features.

The device may further include a display 310 and an operator input device 312. The operator input device may be, for example, a keyboard, mouse, or similar input devices. Processor 140 has access to a memory, and controls the pulse-jet head assembly 210, (specifically the activation of the ejectors therein), operation of the positioning system, operation of each pulse-jet disposed in the pulse-jet head, and operation of the display 310. Memory 326 may be any suitable device in which processor 140 can store and retrieve data 324, such as magnetic, optical, or solid-state storage devices. Processor 140 may include a general purpose digital microprocessor suitably programmed from a computer readable medium carrying necessary programming code, to execute all of the steps required by the present invention, or any hardware or software combination which will perform the equivalent steps. The programming may be provided remotely to processor 140, or previously saved in a computer program product such as memory 326 or some other portable or fixed computer readable medium using any of those devices mentioned above.

As described above, programming for controlling the device according to the present invention is also provided. For example, in certain embodiments described above, the methods employ a device that provides multiple activator dispensing pulse-jet heads, which can be independently or simultaneously controlled based on the nature of the array to be fabricated. In such methods, programming may be employed which allows a user to input a value from which the device may determine the appropriate predetermined fractional substrate thickness distance and then adjust a holder accordingly, i.e., adjust the distance between the pulse-jet head and a surface of the substrate where the features are to be formed. Programming may also be employed to position the pulse-jet head in a "start" position, i.e., where the first row or column of features are to be formed on the substrate. The programming may further control the pulse-jet head and pulse-jets to form an array according to an input selection from a user, e.g., the user may be presented through a graphical interface multiple choices of types of arrays that may be formed. The user, through an input device, may choose the type of array to be formed, wherein the programming controls the device according to the present invention to form the array selected by the user.

Operation of the device will now be described in accordance with the method of the present invention. It will be assumed that memory 326 holds a target drive pattern. This target drive pattern is the instructions for driving the device components as required to form the target array (which includes target locations and dimensions for each spot) on substrate 10 and includes, for example, movement commands to transporters 60 and 45 as well as firing commands for each of the pulse-jets disposed in head 210 coordinated with the movement of head 210 and substrate 10. This target drive pattern is based upon the target array pattern and can have either been input from an appropriate source (such as input device 312, a portable magnetic or optical medium, or from a remote server, any of which communicate with processor 140), or may have been determined by processor 50 based on an input target array pattern (using any of the appropriate sources previously mentioned) and the previously known nominal operating parameters of the apparatus. The target drive pattern further includes instructions to head assembly 210 and positioning system of the device to deposit the activator at each region at which a feature is to be formed. It will be further assumed that the four pulse-jets disposed between the activator dispensing pulse-jets will be loaded with four different monomers. The flood station 68 has been loaded with all necessary solutions. Operation of the following sequences are controlled by processor 140, following initial operator activation, unless a contrary indication appears.

For any given substrate 10, the operation is essentially as follows. A substrate 10 is loaded onto the substrate station 20, either manually or automatical. A target drive pattern necessary to obtain a target array pattern, is determined by processor 140 (if not already provided), based on nominal operating parameters of the device. The device is then operated as follows: (a) if not the first cycle, position substrate 10 at flood station 68 and for all regions of the arrays being formed, deprotected previously deposited and linked biomonomer on substrate 10 at flood station 68; (b) move substrate 10 to receive droplets from head assembly 210 and deposit droplet(s) of activator to produce a first volume from one of the pulse-jet heads disposed within head assembly 210 in accordance with the target drive pattern for each of multiple arrays 12; (c) dispense a second volume of appropriate next monomer onto each region, wherein the volume of monomer is less than that of the activator previously deposited, such that the first linking group is activated by the activator and links to previously deprotected monomer; (d) move substrate 10 back to flood station 68 for oxidation, capping and washing steps over entire substrate as required; and (e) repeat foregoing cycle for all of the regions of all desired arrays 12 until the desired arrays are completed.

With regard to the actual deposition sequence of monomer or activator droplet(s), as already described, in this sequence, processor 140 will operate the device according to the target drive pattern, by causing the positioning system to position head 210 facing substrate station 20, and particularly the mounted substrate 10, and with head assembly 210 at an appropriate distance from substrate 10. Processor 140 then causes the positioning system to scan head assembly 210 across substrate 10 line-by-line (or in some desired platform), while coordinating activation of the ejectors in the head assembly 210 so as to dispense droplets in accordance with the target pattern. As described above, by placing activator dispensing pulse-jets disposed on the ends of the head 210, the head assembly 210 does not have to return to a "home" position before starting the fabrication of a new row or column of arrays. Thus head assembly 210 may be programmed to fabricate the arrays in a bi-directional manner. This can be continued until all arrays 12 to be formed on substrate 10 have been completed. The number of features in any one array can, for example, be at least ten, at least one hundred, at least one thousand, or even at least one hundred thousand.

### UTILITY

The present methods and devices may be used to deposit biological biopolymers or other moieties on surfaces of any of a variety of different substrates, including both flexible and rigid substrates, e.g., in the production of biopolymeric arrays. Preferred materials provide physical support for the deposited material and endure the conditions of the deposition process and of any subsequent treatment or handling or processing that may be encountered in the use of the particular array. The array substrate may take any of a variety of configurations ranging from simple to complex. Thus, the substrate could have generally planar form, as for example, a slide or plate configuration, such as a rectangular or square disc. In many embodiments, the substrate will be shaped generally as a rectangular solid, having a length in the range of about 4 mm to 200 mm, usually about 4 mm to 150 mm, more usually about 4 mm to 125 mm; a width in the range of about 4 mm to 200 mm, usually about 4 mm to 120 mm, and more usually about 4 mm to about 80 mm; and a thickness in the range of about 0.01 mm to about 5 mm, usually from about 0.1 mm to about 2 mm and more usually from about 0.2 mm to about 1 mm. However, larger or smaller substrates may be and can be used, particularly when such are cut after fabrication into smaller size substrates carrying a smaller total number of arrays 12. Substrates of other configurations and equivalent areas can be chosen. The configuration of the array may be selected according to manufacturing, handling, and use considerations.

The substrates may be fabricated from any of a variety of materials. In certain embodiments, such as for example where production of binding pair arrays for use in research and related applications is desired, the materials from which the substrate may be fabricated should ideally exhibit a low level of non-specific binding during hybridization events. In many situations, it will also be preferable to employ a material that is transparent to visible and/or UV light. For flexible substrates, materials of interest include: nylon, both modified and unmodified, nitrocellulose, polypropylene, and the like, where a nylon membrane, as well as derivatives thereof, may be particularly useful in this embodiment. For rigid substrates, specific materials of interest include: glass; fuse silica; silicon, plastics (for example polytetraflouroethylene, polypropylene, polystyrene, polycarbonate, and blends thereof, and the like); metals (for example, gold, platinum, and the like).

The substrate surface onto which the polynucleotide compositions or other moieties is deposited may be smooth or substantially planar, or have irregularities, such as depressions or elevations. The surface may be modified with one or more different layers of compounds that serve to modify the properties of the surface in a desirable manner. Such modification layers of interest include: inorganic and organic layers such as metals, metal oxides, polymers, small organic molecules and the like. Polymeric layers of interest include layers of: peptides, proteins, polynucleic acids or mimetics thereof (for example, peptide nucleic acids and the like); polysaccharides, phospholipids, polyurethanes, polyesters, polycarbonates, polyureas, polyamides, polyetheyleneamines, polyarylene sulfides, polysiloxanes, polyimides, polyacetates, and the like, where the polymers may be hetero- or homopolymeric, and may or may not have separate functional moieties attached thereto (for example, conjugated).

### ARRAYS

Also provided by the subject invention are novel arrays of polymeric binding agents produced using the subject methods, as described above. The subject arrays include at least two distinct polymers that differ by monomeric sequence immobilized on e.g., covalently or non-covalently attached to, different and known locations on the substrate surface. Each distinct polymeric sequence of the array is typically present as a composition of multiple copies of the polymer on the substrate surface, e.g. as a spot on the surface of the substrate. The number of distinct polymeric sequences, and hence spots or similar structures, present on the array may vary, but is generally at least 2, usually at least 5 and more usually at least 10, where the number of different spots on the array may be as a high as 50, 100, 500, 1000, 10,000 or higher, depending on the intended use of the array. The spots of distinct polymers present on the array surface are generally present as a pattern, where the pattern may be in the form of organized rows and columns of spots, e.g. a grid of spots, across the substrate surface, a series of curvilinear rows across the substrate surface, e.g. a series of concentric circles or semi-circles of spots, and the like. The density of spots present on the array surface may vary, but will generally be at least about 10 and usually at least about 100 spots/cm², where the density may be as high as 10⁶ or higher, but will generally not exceed about 10⁵ spots/cm².

in the broadest sense, the arrays of the subject invention are arrays of polymeric binding agents, where the polymeric binding agents may be any of: peptides, proteins, nucleic acids, polysaccharides, synthetic mimetics of such biopolymeric binding agents, etc. In many embodiments of interest, the arrays are arrays of nucleic acids, including oligonucleotides, polynucleotides, synthetic mimetics thereof, and the like. Where the arrays are arrays of nucleic acids, the nucleic acids may be covalently attached to the arrays at any point along the nucleic acid chain, but are generally attached at one of their termini, e.g. the 3' or 5' terminus. In other embodiments, the arrays are arrays of polypeptides, e.g., proteins or fragments thereof.

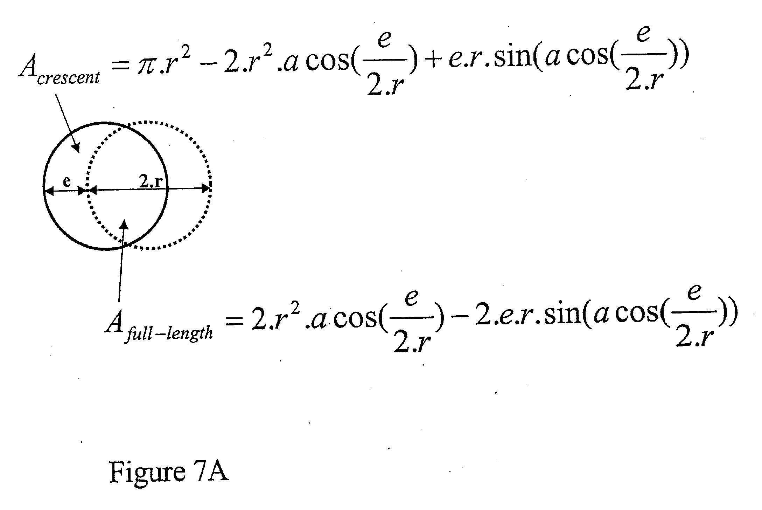

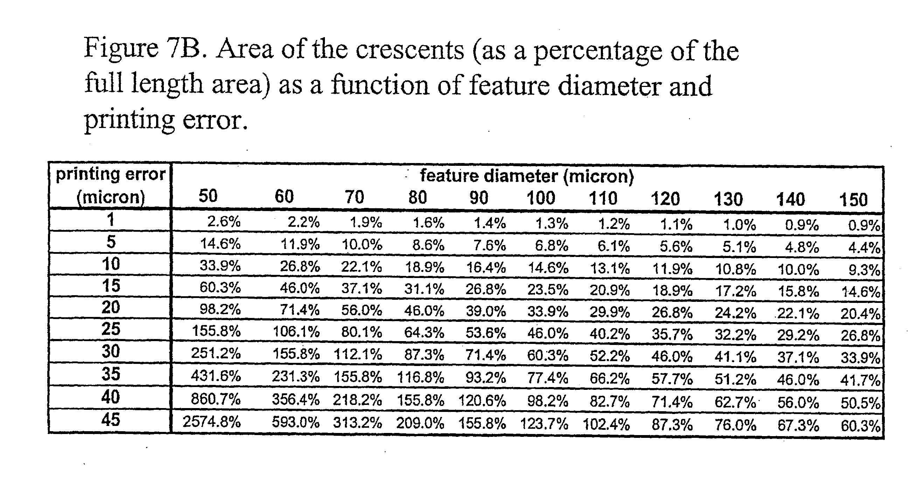

Because of the manner in which the subject arrays are produced, features of the arrays are substantially pure with respect to the type of polymeric agent that makes up the feature, and are characterized by minimal, if any, misalignment resultant crescent features of incomplete polymeric compounds. Such features are known to those of skill in the art and described in Patent No. 6,300,137; the disclosure of which is herein incorporated by reference. As such, in the arrays produced by the present methods, the composition making up a given feature is chemically pure, in certain embodiments ranging in purity from about 0.95⁶⁰=4.5% to 0.99⁶⁰=55%. In addition, each feature is mechanically pure, being characterized by little, if any, crescent shaped areas of incomplete polymeric agents that differ in sequence from that found in the agents positioned in the center of the feature. In other words, the ratio of crescent area vs. the full length sequence area (assuming 100% stepwise chemical coupling yield), should not exceed about 50%, and such as should not exceed about 25% in certain embodiments, where the mechanical purity can be determined using the formula given in Fig. 7A and the estimates in Fig. 7B.

### UTILITY OF PRODUCED ARRAYS

The subject arrays find use in a variety applications, where such applications are generally analyte detection applications in which the presence of a particular analyte in a given sample is detected at least qualitatively, if not quantitatively. Protocols for carrying out such assays are well known to those of skill in the art and need not be described in great detail here. Generally, the sample suspected of comprising the analyte of interest is contacted with an array produced according to the subject methods under conditions sufficient for the analyte to bind to its respective binding pair member that is present on the array. Thus, if the analyte of interest is present in the sample, it binds to the array at the site of its complementary binding member and a complex is formed on the array surface. The presence of this binding complex on the array surface is then detected, e.g. through use of a signal production system, e.g. an isotopic or fluorescent label present on the analyte, etc. The presence of the analyte in the sample is then deduced from the detection of binding complexes on the substrate surface.

Specific analyte detection applications of interest include hybridization assays in which the nucleic acid arrays of the subject invention are employed. In these assays, a sample of target nucleic acids is first prepared, where preparation may include labeling of the target nucleic acids with a label, e.g. a member of signal producing system. Following sample preparation, the sample is contacted with the array under hybridization conditions, whereby complexes are formed between target nucleic acids that are complementary to probe sequences attached to the array surface. The presence of hybridized complexes is then detected. Specific hybridization assays of interest which may be practiced using the subject arrays include: gene discovery assays, differential gene expression analysis assays; nucleic acid sequencing assays, and the like. Patents and patent applications describing methods of using arrays in various applications include: 5,143,854; 5,288,644; 5,324,633; 5,432,049; 5,470,710; 5,492,806; 5,503,980; 5,510,270; 5,525,464; 5,547,839; 5,580,732; 5,661,028; 5,800,992; the disclosures of which are herein incorporated by reference.

Where the arrays are arrays of polypeptide binding agents, e.g., protein arrays, specific applications of interest include analyte detection/proteomics applications, including those described in: 4,591,570; 5,171,695; 5,436,170; 5,486,452; 5,532,128; and 6,197,599; the disclosures of which are herein incorporated by reference; as well as published PCT application Nos. WO 99/39210; WO 00/04832; WO 00/04389; WO 00/04390; WO 00/54046; WO 00/63701; WO 01/14425; and WO 01/40803; the disclosures of the United States priority documents of which are herein incorporated by reference.

In certain embodiments, the subject methods include a step of transmitting data from at least one of the detecting and deriving steps, as described above, to a remote location. By "remote location" is meant a location other than the location at which the array is present and hybridization occur. For example, a remote location could be another location (e.g. office, lab, etc.) in the same city, another location in a different city, another location in a different state, another location in a different country, etc. As such, when one item is indicated as being "remote" from another, what is meant is that the two items are at least in different buildings, and may be at least one mile, ten miles, or at least one hundred miles apart. "Communicating" information means transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data. The data may be transmitted to the remote location for further evaluation and/or use. Any convenient telecommunications means may be employed for transmitting the data, e.g., facsimile, modem, internet, etc.

As such, in using an array made by the method of the present invention, the array will typically be exposed to a sample (for example, a fluorescently labeled analyte, e.g., protein containing sample) and the array then read. Reading of the array may be accomplished by illuminating the array and reading the location and intensity of resulting fluorescence at each feature of the array to detect any binding complexes on the surface of the array. For example, a scanner may be used for this purpose which is similar to the AGILENT MICROARRAY SCANNER device available from Agilent Technologies, Palo Alto, CA. Patents describing suitable scanner devices and methods for their use in the reading of arrays include, but are not limited to: 5,585,639; 5,763,870; 6,084,991; 6,222,664; 6,284,465; 6,371,370; 6,320,196; and 6,406,849, the disclosures of which are herein incorporated by reference.

As previously mentioned, these references are incorporated herein by reference. However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in US 6,221,583 and elsewhere). Results from the reading may be raw results (such as fluorescence intensity readings for each feature in one or more color channels) or may be processed results such as obtained by rejecting a reading for a feature which is below a predetermined threshold and/or forming conclusions based on the pattern read from the array (such as whether or not a particular target sequence may have been present in the sample). The results of the reading (processed or not) may be forwarded (such as by communication) to a remote location if desired, and received there for further use (such as further processing).

### KITS

Kits for use in connection with the subject invention may also be provided. Such kits preferably include at least a computer readable medium including programming as discussed above and instructions. The instructions may include installation or setup directions. The instructions may include directions for use of the invention.

Providing software and instructions as a kit may serve a number of purposes. The combinations may be packaged and purchased as a means of upgrading an existing fabrication device. Alternatively, the combination may be provided in connection with a new device for fabricating arrays, in which the software may be preloaded on the same. In which case, the instructions will serve as a reference manual (or a part thereof) and the computer readable medium as a backup copy to the preloaded utility.

The instructions are generally recorded on a suitable recording medium. For example, the instructions may be printed on a substrate, such as paper or plastic, etc. As such, the instructions may be present in the kits as a package insert, in the labeling of the container of the kit or components thereof (i.e. associated with the packaging or sub packaging), etc. In other embodiments, the instructions are present as an electronic storage data file present on a suitable computer readable storage medium, e.g., CD-ROM, diskette, etc, including the same medium on which the program is presented.

In yet other embodiments, the instructions are not themselves present in the kit, but means for obtaining the instructions from a remote source, e.g. via the Internet, are provided. An example of this embodiment is a kit that includes a web address where the instructions can be viewed and/or from which the instructions can be downloaded. Conversely, means may be provided for obtaining the subject programming from a remote source, such as by providing a web address. Still further, the kit may be one in which both the instructions and software are obtained or downloaded from a remote source, as in the Internet or World Wide Web. Some form of access security or identification protocol may be used to limit access to those entitled to use the subject invention. As with the instructions, the means for obtaining the instructions and/or programming is generally recorded on a suitable recording medium.

It is evident from the above discussion that the above described invention provides an effective and readily applicable methods and devices for the fabrication of biopolymer arrays, which provides for a number of benefits including reduction of malformed features and an increase in the speed of production of the same. Specifically, the subject invention at least reduces and often substantially eliminates the production of misalignment generated crescent areas of incomplete sequences bordering features of *in situ* produced polymers, even when a printhead assembly of multiple individual printheads is employed. As such, the subject invention represents a significant contribution to the art.

All publications and patents cited in this specification are herein incorporated by reference as if each individual publication or patent were specifically and individually indicated to be incorporated by reference. The citation of any publication is for its disclosure prior to the filing date and should not be construed as an admission that the present invention is not entitled to antedate such publication by virtue of prior invention.

While the present invention has been described with reference to the specific embodiments thereof, it should be understood by those skilled in the art that various changes may be made and equivalents may be substituted without departing from the true scope of the invention. In addition, many modifications may be made to adapt a particular situation, material, composition of matter, process, process step or steps, to the objective and scope of the present invention. All such modifications are intended to be within the scope of the claims appended hereto.

## Claims

1. A method of covalently bonding a monomer (48) to a substrate (10) surface (11a), said method comprising:
(a) producing a first volume of a fluid activator (44) on said substrate surface, wherein said substrate surface comprises a functional moiety (42); and
(b) depositing a second volume of said monomer onto said first volume on said surface so that said monomer is activated and reacts with said functional moiety to covalently bond to said substrate surface;
wherein said second volume is smaller than said first volume.

2. A method as claimed in claim 1, wherein said functional moiety is present on a surface bound monomeric residue and said method is a method of producing a polymer covalently bound to a substrate surface.

3. A method as claimed in claim 1 or 2, wherein said monomer is a nucleotide.

4. A method as claimed in any preceding claim, wherein said depositing comprises employing a pulse-jet fluid deposition device.

5. A method as claimed in any preceding claim, wherein said method is a method of producing an array (12) of polymers on said substrate surface.

6. A computer-readable medium comprising a program that controls a pulse-jet deposition device (100) to:
(a) produce a first volume of fluid activator (44) on a substrate (10) surface (11a),
(b) deposit a second volume of fluid monomer (48) onto said first volume on said substrate surface, wherein said second volume is smaller than said first volume, and
(c) repeat steps (a) and (b) as necessary to produce an addressable array.

7. A pulse-jet fluid deposition device (100) for producing an addressable array (12) of biopolymers, said device comprising:
a pulse-jet head assembly (210) comprising a plurality of pulse-jet fluid deposition heads in a linear configuration, wherein said linear configuration of pulse-jet fluid deposition heads comprises terminal pulse-jet heads that deposit a first fluid volume that exceeds the second fluid volume deposited by interior pulse-jet fluid deposition heads of said linear configuration.

8. A pulse-jet fluid deposition device (100) for producing an addressable array (12) of biopolymers, said device comprising:
a computer-readable medium as claimed in claim 6.

9. An array (12) obtainable by means of a method as claimed in claim 5.

10. A method of detecting the presence of an analyte in a sample, said method comprising:
(a) contacting (i) a biopolymeric array (12) as claimed in claim 9 having a polymeric ligand that specifically binds to said analyte, with (ii) a sample suspected of comprising said analyte under conditions sufficient for binding of said analyte to a biopolymeric ligand on said array to occur; and
(b) detecting the presence of binding complexes on the surface of said array to detect the presence of said analyte in said sample.
